(19) Europäisches Patentamt
European Patent Office
Office européen des brevets

(11) EP 1 457 112 B1

(12) **EUROPEAN PATENT SPECIFICATION**

(45) Date of publication and mention of the grant of the patent:
**16.08.2006 Bulletin 2006/33**

(51) Int Cl.:
***A01N 37/02*** *(2006.01)* *A01N 37/02* *(2006.01)*
*A01N 31/02* *(2006.01)*

(21) Application number: **04101040.6**

(22) Date of filing: **12.03.2004**

(54) **Mating disruption agent and method of mating disruption**

Mittel und Verfahren zur Paarungsstörung

Procédé et agent de perturbation de l'accouplement

(84) Designated Contracting States:
**ES FR IT**

(30) Priority: **14.03.2003 JP 2003069102**

(43) Date of publication of application:
**15.09.2004 Bulletin 2004/38**

(73) Proprietor: **Shin-Etsu Chemical Co., Ltd.**
**Chiyoda-ku,**
**Tokyo (JP)**

(72) Inventors:
- **FUKUMOTO, Takehiko**
  **c/o Shin-Etsu Chemical Co.,Ltd.**
  **Niigata-ken, Niigata (JP)**
- **HOJO, Tatsuya**
  **c/o Shin-Etsu Chemical Co.,Ltd.**
  **Niigata-ken, Niigata (JP)**
- **AIBA, Noboru**
  **c/o Shin-Etsu Chemical Co.,Ltd.**
  **Niigata-ken, Niigata (JP)**
- **OGURA, Kouichi**
  **c/o Shin-Etsu Chemical Co.,Ltd.**
  **TOKYO, Tokyo (JP)**
- **MOCHIZUKI, Fumiaki**
  **c/o Shin-Etsu Chemical Co.,Ltd.**
  **Niigata-ken, Niigata (JP)**

(74) Representative: **Jorio, Paolo et al**
**Studio Torta S.r.l.**
**Via Viotti, 9**
**10121 Torino (IT)**

(56) References cited:
**WO-A-01/26462**

- **DATABASE CHEMABS [Online] CHEMICAL ABSTRACTS SERVICE, COLUMBUS, OHIO, US; KEHAT, M. ET AL: "sex pheromone traps for monitoring the peach twig borer, Anarsia lineatella Zeller: effect of pheromone components, pheromone dose, field aging of dispenser, and type of trap on male captures" XP002295727 retrieved from STN Database accession no. 1995:215270 & PHYTOPARASITICA , 22(4), 291-8 CODEN: PHPRA2; ISSN: 0334-2123 PHYTOPARASITICA , 22(4), 291-8 CODEN: PHPRA2; ISSN: 0334-2123, 1994,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

1. Field of the invention

This invention relates to the method of mating disruption by sex pheromone of the peach twig borer, which is a significantly harmful insect of the peach and nectarine in Europe and America (the common name of the *Anarsia lineatella* is 'peach twig borer,' and its abbreviated name is PTwB).

2. Description of the related art

Presently, pest control technology on a global scale has changed from synthetic chemical insecticide control methods to Integrated Pest Management (IPM), which employs species-specific chemical agents, the influence of which on the ecosystem is negligible, and biological control. Recently, the use of sex pheromone-mediated mating disruption is gaining more attention as one method of IPM.

The oriental fruit moth (*Grapholita molesta* Busck) and PTwB are two significantly harmful insects of the peach and the nectarine in Europe and America. Sex pheromone mating disruption for the control of the oriental fruit moth has been developed for a considerable time and proved very successful. This is in opposition to the situation surrounding the peach twig borer. In the 1970s, Arn et al. discovered an effective ingredient for the control of the peach twig borer, which was a mixture of (E)-5-decenyl acetate and the corresponding alcohol (E)-5-decen-1-ol. The (E)-5-decenyl acetate to (E)-5-decen-1-ol weight ratio is 85:15. The effectiveness of this mating disruption agent was examined repeatedly. However, it proved extremely unstable and has not yet been put into practical use. As it is necessary to use synthetic chemical insecticide for the control of the peach twig borer as part of the overall peach insect pest control, the use of the pheromone mating disruption agent for the control of the oriental fruit moth is not widespread. Thus, demands have been made to develop a mating disruption agent for the control of the peach twig borer as soon as possible. The reports concerning the peach twig borer includes: "Sex Pheromone of the Peach Twig Borer Moth," Environ. Entomol., 4, 580-582 (1975); "Control of Peach Twig Borer on Almonds and Peaches in California," J. Econ. Entomol. 52, 637-639 (1959); "Reexamination of the Female Sex Pheromone of the Peach Twig Borer: Field Screening of Minor Constituents of Pheromone Gland Extracts and Pheromone Analogs," J. Econ. Entomol. 85(5), 1790-1716 (1992). WO 01 726 462 discloses the pheromone for Anarsia lineatella consisting of E5-decenyl-1-yl acetate and E5-decen-1-ol in a ratio of 82: 18. Kehat et al. (Phytoparasitica, 1994, 22(4), p. 291.298) reported the blend containing a 72:28 or 83:17 ratio as being optimal for attracting males.

## SUMMARY OF THE INVENTION

The invention was created considering the aforementioned circumstances, and its purpose is to offer a mating disruption agent for the control of the peach twig borer and the method of mating disruption that employs this mating disruption agent. The effectiveness of attraction inhibition of this mating disruption agent is very high and is flawless right up to the post harvest of the peach. This mating disruption agent can control the harmful insect without the use of insecticide spray.

The inventors examined the problem closely, and they discovered the following about the mating disruption of the Peach twig borer. The effectiveness of disruption is not uniform even if the dosage is increased, as long as a natural pheromone composition of the (E)-5-decenyl acetate and (E)-5-decen-1-ol weight at ratio of 85:15 is used. The mating disruption composition comprising the acetate and keeping the alcohol E-5-decen-1-ol as little as possible, is effective in mating disruption. The desirable number of installation points is 300 points or more per hectare. Finally, this invention was created in consideration of the aforementioned three discoveries.

The invention offers a mating disruption agent for the control of the peach twig borer, comprising 5-decenyl acetate having an E/Z ratio of (65/35) to (100/0) and 5-decen-1-ol having an E/Z ratio of (65/35) to (100/0), wherein the 5-decen-1-ol is contained at 10% by weight or less based on total weight of the 5-decenyl acetate and the 5-decen-1-ol. Moreover, the invention provides a method of mating disruption using this mating disruption agent for the control of the peach twig borer. The E/Z ratio is a weight ratio. However, it is noted that the value of the E/Z ratio is equal to the molar ratio because molecular weights of the isomers are same).

The invention enables the very high and perfect effectiveness of attraction inhibition that continues to post peach harvest. Therefore, the mating disruption of the Peach twig borer can be maintained without the use of insecticide spray.

## DETAILED DESCRIPTION OF THE PREFERRED EMBODIMENTS

The invention targets the peach twig borer, which is a significantly harmful insect of the peach and the nectarine

in Europe and America.

The mating disruption agent of the invention comprises a mixture of 5-decenyl acetate having an E/Z ratio (65/35) to (100/0) and 5-decen-1-ol having an E/Z ratio of (65/35) to (100/0). A natural pheromone composition may be commonly used as a mating disruption agent toward a harmful insect. However, owing to the high volatility of (E)-5-decen-1-ol, it is assumed that it will be relatively difficult to maintain a concentration of the pheromone which is used in the control of the peach twig borer. Hence, according to the present invention, (E)-5-decenyl acetate is a main component of the composition. The structural formulae and names of the E and Z isomers of 5-decenyl acetate and 5-decen-1-ol are shown below:

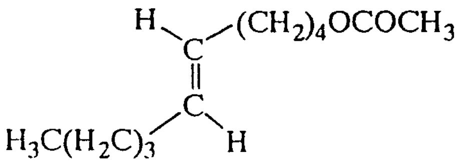

(E)-5-decenyl acetate)

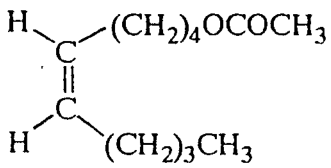

(Z)-5-decenyl acetate)

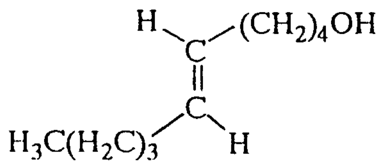

(E)-5-decene-1-ol)

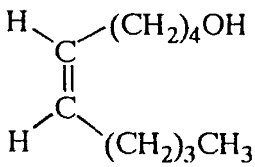

(Z)-5-decene-1-ol)

Strictly speaking, it may not be practical that none of the alcohol is contained in the acetate in a synthetic process. Therefore, the alcohol may be contained in the acetate at an amount of 10% by weight or less, preferably 0 to 5% by weight, more preferably 0.5 to 2.0% by weight so that the pheromone concentration can be maintained in a mating disruption district. This is because more than 10% by weight of the alcohol contained in the acetate decreases the attraction inhibitory effect by the mating disruption agent.

The E/Z ratios of (E)-5-decenyl acetate and (E)-5-decen-1-ol are (65/35) to (100/0). It is preferable to use the E isomers selectively. Because the Z isomers do not obstruct the effectiveness of the mating disruption, however, there will be no problem if the E/Z ratios are within said range as the result of the industrial synthetic process.

Moreover, the mating disruption agent of the invention may comprise one or more inactive compounds having no biological activity or a stabilizer in addition to said active ingredients. For instance, the mating disruption agent of the invention can comprise a linear and saturated acetate such as dodecylacetate and tetradecylacetate, a stabilizer such as 2,6-di-tert-butyl-4-methylphenol (BHT), an antioxidant such as vitamin E and 2,5-di-tert-butylhydroquinone (DBH) or a UV absorber of various kinds.

An amount of the mating disruption agent to be used depends considerably on temperature and a velocity of the wind in the field. In general, preferably 120 to 200 g E-5-decenyl acetate may be used per hectare. It is also preferable that this mating disruption agent has a sustained release formulation that can cover the growing seasons of the peach and the nectarine.

The number of points where the mating disruption agents of the present invention are placed may be preferably 300 points or more per hectare, more preferably 500 or more points per hectare. This is because the vapor pressure of the alcohol (E)-5-decen-1-ol is comparatively higher than the vapor pressure of E-5-decenyl acetate so that the volatility of the pheromones in the mating disruption district increases, and as a result, the pheromone concentration in the field does not become denser. Moreover, when the number of points is decreased, it is noted that pheromone concentration is not easily accumulated, and partial unevenness in pheromone concentration clearly appears, thus providing the insect with the opportunity to copulate. The number of points does not have a particular upper limit. However, 2,000 points or less per hectare may be preferable in view of easy installment of the mating disruption agent.

The invention will be more specifically explained by the following examples and comparative examples; however, it is not limited to the following examples.

Example 1-2 and Comparative Example 1-7

The experiments were conducted in central Italy, in experimental areas A-G (2 to 12 ha per area) of the peach and nectarine-growing district in Emilia Romagna. Tested were seven types of pheromone preparations being variable in the amount of active ingredient, alcohol content or E/Z ratio. The pheromone preparations are designed so that each pheromone contained in each polyethylene tube will be released in sustained manner and the release period or life of each pheromone will be nearly identical. Mating disruption agents were prepared by packing these pheromone preparations in 20-cm-long polyethylene tubes in the effective amount thereof. The mating disruption agents were arranged at 1000 points per hectare on April 25. The effective amount of ingredients is expressed in a total amount of the E/Z-5-decenyl acetate and the E/Z-5-decen-1-ol and shown in Table 1. One PTwB pheromone trap per hectare was placed in each experimental area, and the number of the first generation (April 25 to June 30) and the second generation (July 1 to August 25) of PTwB attracted to each trap was examined. The attraction inhibition rate was calculated using the following formula:

Attraction inhibition percentage (%) = (No. of insects attracted and trapped in the pheromone treatement) ÷ (No. of insects attracted and trapped in an untreated area) x100.

The BT agent was used as an insecticide and scattered late in the period when the insect damage tended to increase. The percentage of damaged plants is obtained from an investigation which targeted 250 to 400 nectarines in each experiment area.

The results are shown in Table 1. When a mating disruption agent containing a highly pure acetate having 1% by weight or less alcohol was used, the attraction inhibition effect was very high and complete right up to the post harvest of the peach in comparison with the mating disruption agents comprising natural (E)-5-decenyl acetate and E-5-decen-1-ol at the ratio of 85:15. The percentage of damaged plants was zero even without an insecticide spray.

The attraction inhibition percentage in the mating disruption area where the naturally composed mating disruption agents was used decreased relatively early in the period. And damaged fruits were observed even using an insecticide to some extent.

Moreover, the attraction inhibition effect of the highly pure acetate mating disruption agent was almost perfect in both cases of 1,000 points and 500 points per hectare. However, the attraction inhibition effect of the naturally composed mating disruption agents decreased in decreasing order of the points per hectare such as 1,000 > 700 > 500. This result suggests that the larger the number of points is, the larger the mating disruption effect on the peach twig borer is and that preferably at least 300 points per hectare, more preferable 500 points or higher per hectare may be desirable.

Table 1

| | Experimental condition | | | | | | Evaluation result | | | |
|---|---|---|---|---|---|---|---|---|---|---|
| | Experimental area | Treated area (ha) | Amount of effective ingredient (g/ha) | Ratio of acetate/ alcohol | E/Z ratio (*1) | Number of points (/ha) | Attraction inhibition percentage 1st generation (%) | Attraction inhibition percentage 2nd generation (%) | Number of insecticide dosages | Percentage of damaged plants (%) |
| Example 1 | B | 9 | 190 | 99/1 | 80/20 | 1000 | 100 | 100 | 0 | 0 to 2 |
| Example 2 | G | 2 | 190 | 90/10 | 80/20 | 1000 | 100 | 97 | 0 | 0 to 2 |
| Comp. Ex. 1 | A | 5 | 190 | 85/15 | 100/0 | 1000 | 100 | 84 | 1 | 2 to 5 |
| Comp. Ex. 2 | C | 12 | 190 | 85/15 | 80/20 | 1000 | 97 | 40 | 1 | 5 to 10 |
| Comp. Ex. 3 | D | 4 | 300 | 85/15 | 80/20 | 1000 | 100 | 93 | 2 | 5 to 10 |
| Comp. Ex. 4 | E | 4 | 210 | 85/15 | 80/20 | 1000 | 90 | 73 | 2 | 10 to 20 |
| Comp. Ex. 5 | F | 3 | 300 | 85/15 | 80/20 | 1000 | 60 | 40 | 0 | 15 to 35 |
| Comp. Ex. 6 | H | 2 | 190 | 85/15 | 80/20 | 700 | 97 | 77 | 1 | not measured |
| Comp. Ex. 7 | I | 2 | 190 | 85/15 | 80/20 | 500 | 60 | 49 | 1 | not measured |

*1 The E/Z ratio of the acetate was indentical to the E/Z ratio of the alcohol

## Claims

1. A peach twig borer mating disruption agent comprising 5-decenyl acetate having an E/Z ratio of (65/35) to (100/0) and 5-decen-1-ol having an E/Z ratio of (65/35) to (100/0), wherein the 5-decen-1-ol is contained at 10% by weight or less based on total weight of the 5-decen-1-ol and the 5-decenyl acetate.

2. A method of peach twig borer mating disruption comprising a step of using said peach twig borer mating disruption agent according to Claim 1.

3. The method of peach borer mating disruption according to Claim 2 wherein said mating disruption agent is placed at 300 or more points per hectare.

## Patentansprüche

1. Mittel zur Paarungsstörung der Pfirsichmotte, das 5-Decenylacetat mit einem E/Z-Verhältnis von 65/35 bis 100/0 und 5-Decen-1-ol mit einem E/Z-Verhältnis von 65/35 bis 100/0 umfasst, wobei das 5-Decen-1-ol in einer Menge von 10 Gew.-% oder weniger, bezogen auf das Gesamtgewicht von 5-Decen-1-ol und 5-Decenylacetat, enthalten ist.

2. Verfahren zur Paarungsstörung der Pfirsichmotte, das die Stufe der Verwendung des Mittels zur Paarungsstörung der Pfirsichmotte nach Anspruch 1 umfasst.

3. Verfahren zur Paarungsstörung der Pfirsichmotte nach Anspruch 2, wobei das Mittel zur Paarungsstörung an 300 oder mehr Punkten pro Hektar appliziert wird.

## Revendications

1. Agent de perturbation de l'accouplement de la petite mineuse du pêcher comprenant de l'acétate de 5-décényle ayant un rapport trans/cis de (65/35) à (100/0) et du 5-décène-1-ol ayant un rapport trans/cis de (65/35) à (100/0), dans lequel le 5-décène-1-ol est incorporé à 10 % en poids ou moins par rapport au poids total de 5-décène-1-ol et d'acétate de 5-décényle.

2. Procédé de perturbation de l'accouplement de la petite mineuse du pêcher comprenant une étape d'utilisation dudit agent de perturbation de l'accouplement de la petite mineuse du pêcher selon la Revendication 1.

3. Procédé de perturbation de l'accouplement de la petite mineuse du pêcher selon la Revendication 2, dans lequel ledit agent de perturbation de l'accouplement est placé en 300 points ou plus par hectare.